# EUROPEAN PATENT SPECIFICATION

(11) **EP 3 047 614 B1**
(45) Date of publication and mention of the grant of the patent: **29.04.2020**
(21) Application number: 14789331.7
(22) Date of filing: 10.09.2014
(51) Int. Cl.: H04L 12/753

(54) **MESSAGING SYSTEM**
NACHRICHTENÜBERMITTLUNGSSYSTEM
SYSTÈME DE MESSAGERIE

(30) Priority: 20.09.2013 GB 201316842
(43) Date of publication of application: 27.07.2016
(73) Proprietor: TCS John Huxley Europe Limited, London SE1 7SP (GB)
(72) Inventor: FRENCH, Nicholas Richard Baker, Heslington York YO10 6GA (GB)
(74) Representative: Murgitroyd & Company
(86) International application number: PCT/GB2014/000357
(87) International publication number: WO 2015/040358

(56) References cited:
- EP-A2- 1 324 532
- WO-A1-99/55042
- US-A1- 2002 150 094

## Description

The present invention relates to a messaging system for transmitting messages over a communications network between message originators, communication nodes and message consumers.

Currently available technology can be found in, for example, EP1324532 A2.

In many messaging systems where a message service provider operates a server linked to message producer terminals and message consumer terminals via a communications network, the server includes virtual "mailboxes" for each consumer, and message producers can send messages to the server for placing in the respective mailbox of the recipient. The recipient then requests the message to be sent from the server to the recipient's terminal.

A disadvantage of communications networks organised on such a "hub and spoke" model in which a central "hub" node is connected to a plurality of terminals, is that a message from one terminal to another terminal is always routed through the central "hub" node. A result of this is that all messages between terminals on the network pass through the central hub, necessitating large amounts of processing capacity at the central hub in order to handle messaging at peak times.

An objective of the present invention is to provide a messaging system in which a message from a terminal on the system can be directed to a one or more message consumers connected to the system, without necessarily passing through a central point or "hub". The messaging system of the present invention seeks to distribute messaging over the network to avoid large concentrations of traffic, even at peak traffic volumes.

A system, node, method and apparatus are provided substantially as described herein and according to the appended claims.

According to a first aspect of the invention, there is provided a hierarchical system for transmitting a message from a sender to one or more recipients via at least one communication node, wherein at least one communication node is connected to a "parent" communication node and to a number of "child" communication nodes, and wherein each communication node comprises:
means for receiving a message including information defining a message type and a message origin identifier;
a memory, storing:
   data identifying respective devices associated with the "child" communication nodes; data identifying a device associated with the "parent" communication node; and
   a register relating each message type to a number of message destinations selected from the "child" communication nodes and the "parent" communication node;
and processor means operable to:
determine the message type of a received message;
determine one or more destinations for the received message, on the basis of the determined message type and the correlation stored in the register; and
forward the received message to the determined destination or destinations;
and wherein the processor is further operable to:
receive from a device associated with a child node an indication of a message type and message origin identifier;
store the specified message type and origin identifier in its register; determine, from the message origin identifier, if a message of the specified type and origin will be received from a device associated with a child node; and
   i. if it is determined that the message will be received from a child node, send a message to that child node to store the specified message type and origin identifier in a memory, in association with the address of the node; and
   ii. if it is determined that the message will not be received from a child node, send a message to the parent node to store the specified message type and origin identifier in a memory, in association with the address of the node.

A second aspect of the invention provides system for transmitting a message from a sender to one or more recipients via at least one communication node, wherein each communication node has a "parent" communication port and to a number of "child" communication ports, and wherein each communication node comprises:
means for receiving a message including information defining a message type, and a message origin identifier;
a memory, comprising:
   a first register storing:
   data identifying one or more devices associated with respective "child" communication ports;
   data identifying one or more device associated with the "parent" communication port; and
   a second register storing:
      data relating each message type to a number of message destinations selected from the devices associated with the "child" communication nodes and with the "parent" communication node;
      and processor means operable to:
         determine the message type of a received message; determine one or more destinations for the received message, on the basis of the determined message type and the correlation stored in the second register; and
         forward the received message to the determined destination or destinations.

In an advantageous embodiment, the message includes information concerning a response requirement, and the processor is further operable to:
receive at a child port an indication of a message type and message origin identifier;
store the specified message type and origin identifier in its second register; determine, from the message origin identifier, if a message of the specified type and origin will be received at a child port; and
   iii. if it is determined that the message will be received at a child port, send a message to the device associated with that child port to store the specified message type and origin identifier in its memory, in association with the address of the node; and
   iv. if it is determined that the message will not be received at a child port, send a message to the device associated with the parent node to store the specified message type and origin identifier in its memory, in association with the address of the node;
and wherein the processor is further operable, when it is determined that a received message requires a reply, to:
   v. determine which of the child and parent ports the message was received at;
   vi. extract from the message the message origin identifier; and
   vii. add to the first register the message origin identifier in relation to the determined port.

Other aspects of the invention concern methods of transmitting messages overregulated occasions network, and communication nodes for use in hierarchical communication systems.

### Description of the Illustrated Embodiment

An embodiment of the invention will now be described in detail with reference to the accompanying drawings, in which:
Figure 1 is a schematic view of a communications system in which message producer devices, message consumer devices, and intermediate nodes are connected together by a communications network.
Figure 2 illustrates schematically the hierarchical nature of the connection protocols established over the communications network.
Figure 3 is a schematic illustration of hardware elements present in a message generator device;
Figure 4 is an illustration of the data structure of a message sent over the network;
Figure 5 is a schematic illustration of the message routing hardware present in a table node;
Figure 6 is a schematic illustration of hardware elements present in a message consumer device;
Figure 7 is a schematic illustration of a message generator connected to a table node, showing how the memories of the two devices are populated;
Figure 8 is a schematic illustration, similar to Figure 7, of a message consumer connected to a table node, showing how the memories of the two devices are populated;
Figure 9 is a schematic illustration of a table node connected to a site node, showing how the memories of the two devices are populated;
Figure 10 is a flowchart illustrating the transfer of data when a child node is connected to a parent node;
Figure 11 is a schematic illustration of a part of a network; and
Figure 12 is a schematic illustration of a roulette table and the communication links between elements of the roulette table and a table node;

The communication system will be described in terms of its use in a gaming environment. However, it should be clearly understood that the communication system is applicable to any messaging system in which messages originating at a node, or at a device connected to a node of the system are to be directed to one or more other nodes or devices.

### Description of the Illustrated Embodiment

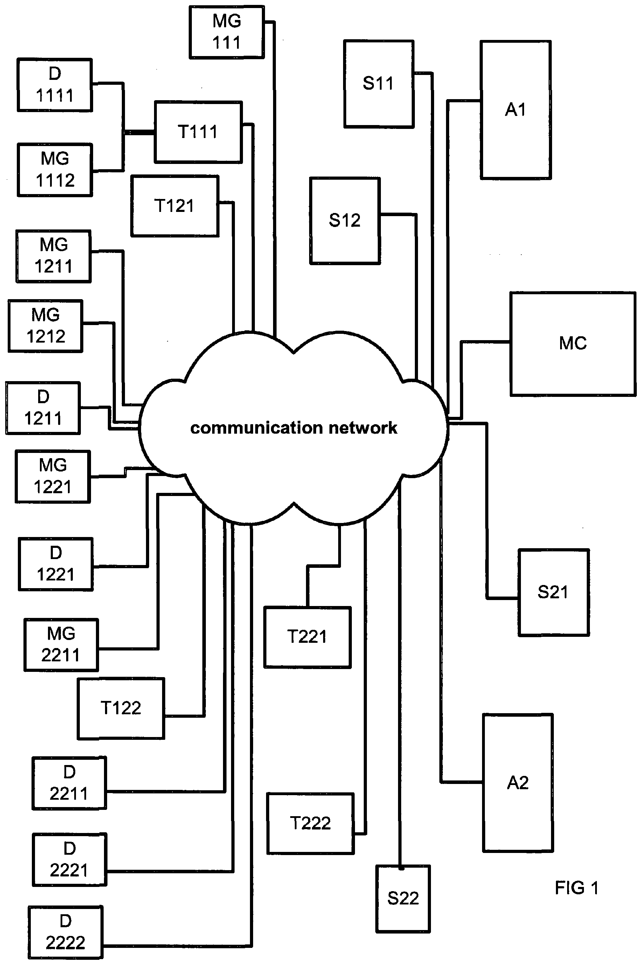

The communication system illustrated in Figure 1 comprises a plurality of devices all linked to a communications network which provides messaging paths between the devices. The illustrated example relates to an electronic gaming environment, in which a plurality of gaming tables T are provided at each of a number of gaming sites S, each gaming table having associated with it a number of message generators MG for detecting events occurring at the gaming table and generating messages concerning those events, and a number of displays D which may, for example, display information relative to the game in progress to users and/or operators of the gaming table.

A number of separate sites S may be grouped together in the gaming service provider's organisation to constitute an area A, and a number of areas A may be linked to a head office HO.

Each of the gaming tables T has a communications node associated with it, the gaming tables at a casino location all being linked to a communications node S associated with that gaming site. The communications nodes S of gaming sites in a particular area are all linked to a communications node A associated with that area, and the nodes associated with each area are linked to the communications node HO associated with the Head Office. Further strata in this hierarchical organisation are, of course, possible. For example, an "area" may represent a geographical area of a state, and casinos in a particular state or country may be all linked to a "country" communications node, with all countries in a region being linked to a "region" communications node. The "region" nodes may be linked to a "global headquarters" communication node.

Devices in the communication system are of four general types. Devices which produce originating messages are referred to as "message generators", and are illustrated in Figure 1 with the notation MG. These devices detect events, such as placing of a bet, arrival of a player at a table, dealing of a hand of cards at the table, outcome of a spin of a roulette wheel at the table, etc and generate a message indicative of the event.

Devices which receive messages produced by the message generators and produce an output such as a display on the basis of the received messages are referred to as "message consumers" and are illustrated in Figure 1 with the notation D. In the case of a roulette table, the message consumer device may for example be a display on the table indicating bets placed at the table, or a display confirming the outcome of a spin of the roulette wheel.

It will be appreciated that there may be devices which are both message generators and message consumers, and such devices will have the functionality of a both message generator device MG and a message consumer device D.

Communication nodes at the intermediate levels of the hierarchical system are all essentially identical in function, and each intermediate node is connected to one "parent" node at the next higher level in the hierarchy, and to one or more "child" nodes at the next lower level in the hierarchy. The intermediate node may receive messages either from message generators directly, or from other communication nodes (child or parent) to which they are connected. For example, a "table" node may receive messages from message generators associated with the table node, or may receive messages from the "site" communications node associated with the casino in which the table is located.

The "head office" communications node HO receives messages from the "area" communications nodes as its "child" nodes, but has no "parent" node. The "head office" node may be the destination of messages, and it may also function to redistribute messages from one "area" communications node to one or more other "area" nodes. The "head office" node may also include the functionality of a message generator.

It will be understood that although the hierarchical organisation of the communications system may reflect the physical locations of the various devices, if the communications network can provide the appropriate communications path, then a communications node at any particular physical location may have its parent node at any other location, and may also have child nodes at different locations. For example, a node associated with a gaming table in a first casino may have as one of its child nodes a display device or a message generator situated at another casino. Likewise, a node associated with a gaming table in a first casino may have as its parent node a communications node in a location other than the first casino.

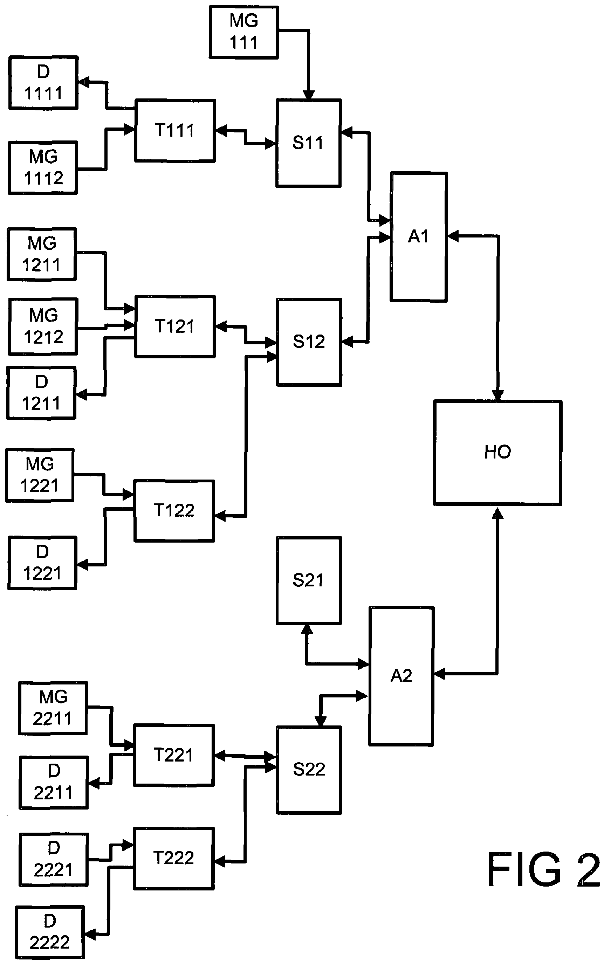

Figure 2 schematically illustrates the hierarchical structure of the connections between the display devices, message generators and communication nodes of the network such as that shown in Figure 1. In this example, a "head office" node HO is the parent node of two "area" nodes A1 and A2. Each area node A1, A2 is the parent of two "site" nodes, S11 and S12 being the site nodes which are child nodes of area node A1, and site nodes S21 and S22 being the child nodes of area node A2.

Site node S11 has two child nodes, namely the message generator 111 and the table node T111. Table node T111 has as its child nodes a display device D1111 and a message generator MG1112.

Site node S21 has no child nodes, while site node S22 has two child nodes, namely table nodes T221 and T222. Table node T221 has two child nodes, namely message generator MG2211 and display device D2211, while table node T221 has two child nodes, namely display devices D2221 and D2222.

### Structure of a message generator device

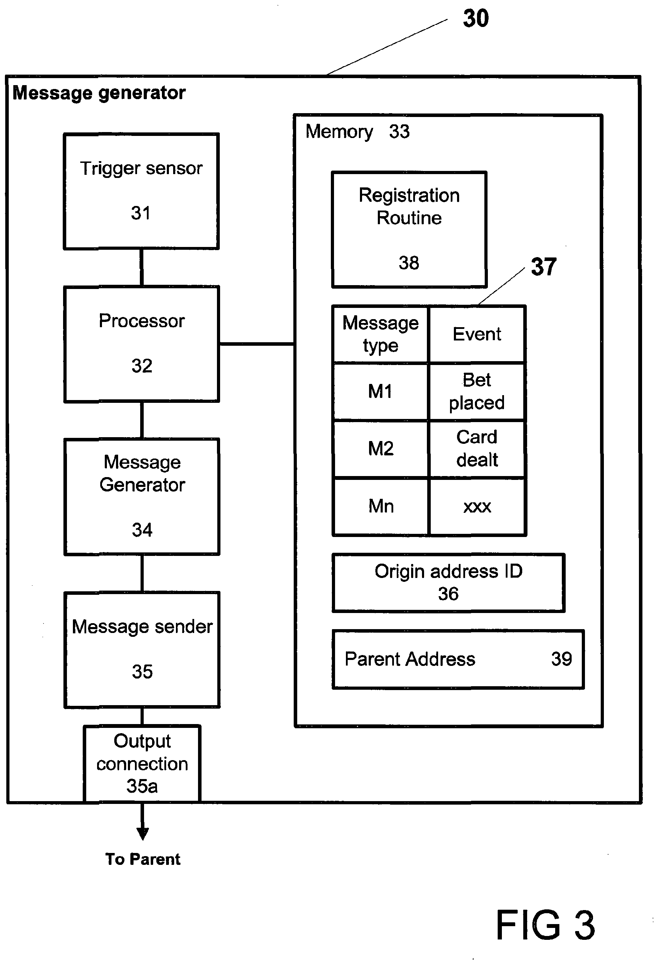

Figure 3 illustrates the structure of a message generator device 30. The device comprises a trigger sensor 31 which detects an event, such as for example the placing of a bet, or the outcome of a spin of a roulette wheel. The trigger sensor 31 may be a sensor detecting a physical event, such as a player taking a seat at the table, or may detect an electrical output such as the illumination of an indicator bulb, or the operation of a switch by a croupier at the table. The trigger sensor may be able to detect a number of different events, and produce a respective corresponding output indicating the occurrence of each different event.

The trigger sensor is linked to a processor 32, which is connected to a memory 33, a message generator module 34 and a message sender 35. In the memory 33 are stored an origin address 36, which may be the network address such as "MG1112" or some other unique identifier of the message generator. The memory 33 also stores one or more message types 37, a registration routine 38 and the address or other identifier 39 of the parent node to which the message generator is connected. This identifier is stored in memory 33 during execution of the registration routine 38, as will be described below. The memory may store more than one message type 37, each message type corresponding to a particular event detectable by the trigger sensor. The message generator may, in some embodiments, have more than one trigger sensor 31, each trigger sensor 31 being arranged to detect a particular event associated with a corresponding message type.

In operation, the trigger sensor 31 detects an event and sends a signal to the processor 32 indicating detection of the event and optionally also other relevant data concerning the event. The processor 32 retrieves from the memory the message type associated with that event, and the message generator 34 generates a message identifying the message type, the origin of the message, and optionally also containing the further relevant data as the message content. For example, the message may be message type M1 indicating that a bet has been placed, the origin address MG1112 indicating where the bet was placed, and the content of the message may be that a bet of a predetermined amount has been placed by a particular player or on a particular number. The assembled message is then sent, by the message sender 35, to the parent node to which the message generator 30 is connected, via an output connection 35a.

### Structure of a message

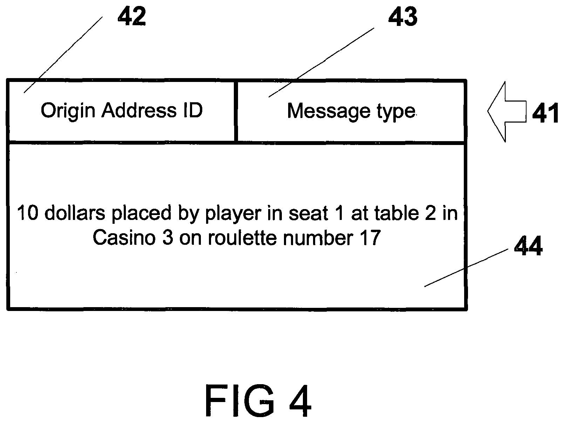

Figure 4 illustrates the data structure of a typical message. The message contains a header part 41, which contains the origin address identifier 42 of the message generator which generated the message and a message type identifier 43. The message content 44 will contain the additional detail, if any. For example, if the "Message Type" data indicates that the message is of type M1 indicating that a bet has been placed, the message content 44 may identify the amount of the bet, the player, the table being played and the number or outcome on which the bet has been placed, for example "10 dollars placed by player in seat 1 at table 2 in Casino 3 on roulette number 17". Alternatively, if the message is simply to indicate that a player has taken a seat at the table, in order to enable another device on the network to keep a count of how many players are present at that table, the message type data and the message origin may be sufficient to uniquely identify that event and the message content field may then be blank.

The header part 41 of the message may also include data to indicate that a reply message is required by the originating device from any device which receives the particular message. Messages being transmitted across the network thus fall into two broad categories, those which require a response and those which do not.

It will be appreciated that, for those types of message which require a response, each communication node through which the message passes from its origin to its destination will necessarily form part of the return route for the response from the destination back to the origin. An example of this type of message is a message which one device sends to second device in order to interrogate the second device as to its current configuration.

### Structure of a communications node

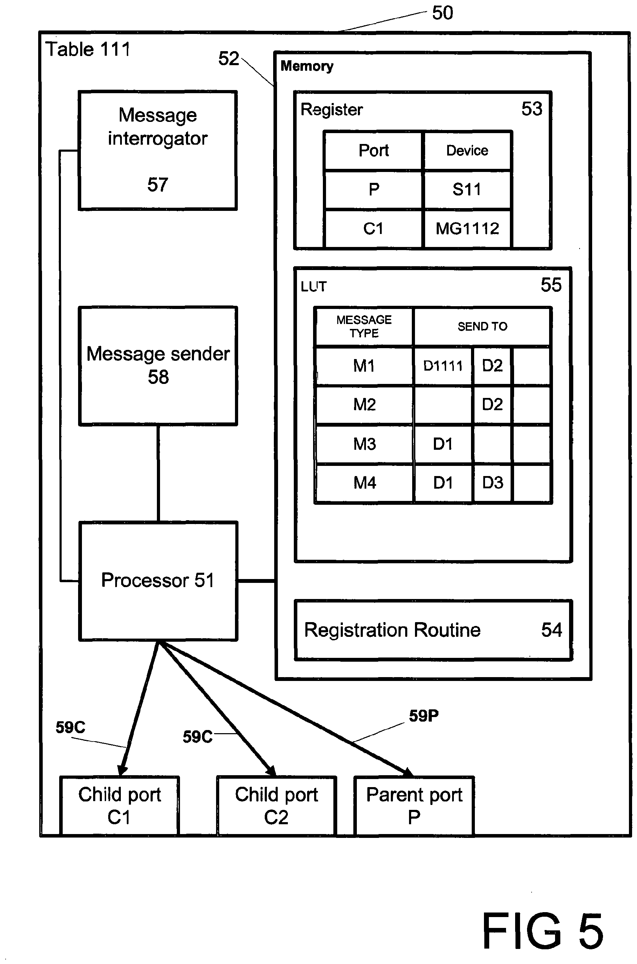

Figure 5 illustrates the structure of a communications node 50 at an intermediate level in the hierarchical system.

The node 50 has an 2 child ports C1 and C2 for sending messages to, and receiving incoming messages from, child nodes connected to the communications node 50. In the illustrated embodiment two child ports C1 and C2 are shown, but the number of child ports at any communications node 50 may be fewer or greater than two. The communications node 50 also has a parent port P for sending messages to, and receiving incoming messages from, a parent node to which the communications node 50 is connected. The communications node 50 further comprises a message interrogator 57 which determines the message type and optionally also the origin address of an incoming message. Also linked to the processor 51 is a message sender 58, and output connections to the child ports CI and C2 connected to each of the child nodes of node 50, and an output connection to parent port P connected to the parent node of node 50.

The node comprises a processor 51 and a memory 52. The memory 52 has stored in it, in a register 53, the address (or other identifier) of the device to which the communications node 50 is connected via its "parent" port P (if any), and a list of the devices to which the node 50 is connected via the "child" nodes C1 and C2, i.e. the nodes or devices at a lower hierarchical level. The memory 52 also stores a registration routine 54 which is used by the processor 51 when the node 50 is initially connected to the communication system. A look-up table 55 in the memory 52 stores a correlation between incoming message types M1, M2...Mn and the destination address or addresses to which each of those message types is or are to be forwarded by the node 50. These destination addresses are selected from the addresses of "child" nodes and the address of the "parent" node of node 50 held in the register 53.

In operation, an incoming message is received at a child port C1, C2 or the parent port P, and interrogated in the interrogator 57 to determine its message type and optionally also its origin. The processor 51 then retrieves from the look-up table 55 the addresses of the nodes or devices to which messages of the identified type are to be sent, from among the child and parent nodes of node 50. The processor 51 then causes the message sender 58 to forward the messages to the retrieved addresses, i.e. to one or more of the child nodes via the relevant child port C1, C2, and/or to the parent node of node 50 via the parent port P.

### Structure of a message consumer device

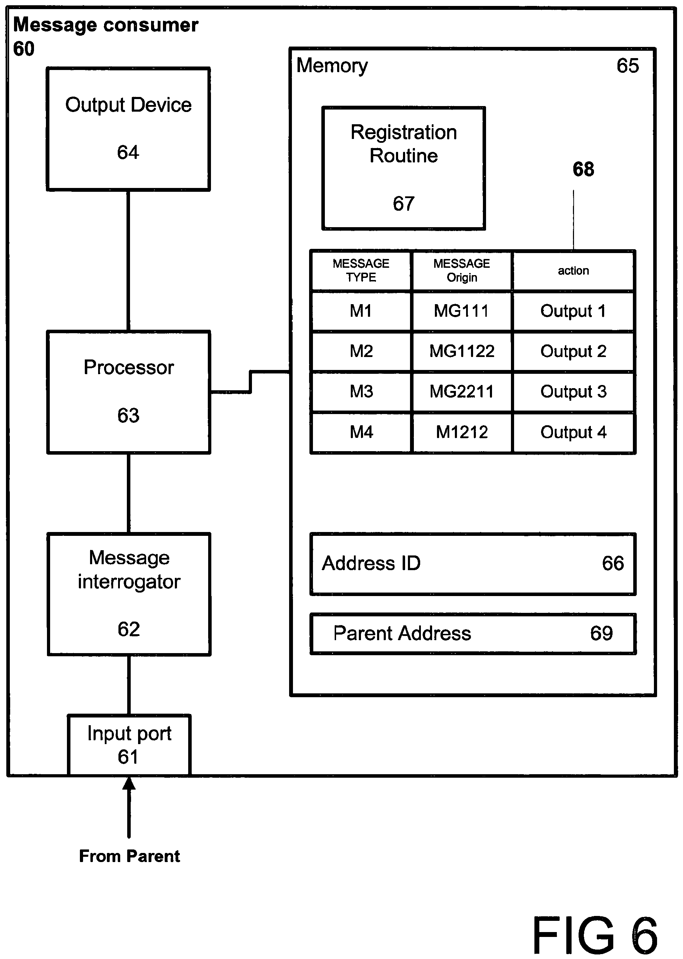

Figure 6 illustrates the structure of a message consumer device 60, which is the ultimate destination of a message. The message consumer has an input port 61 for receiving messages from its "parent" node. Messages received at the consumer device 60 are delivered to a message interrogator 62, which is linked to a processor 63 and to an output device 64, which may be a display device, an audio/visual display screen, or some other indicator means such as a lamp or an alarm. Processor 63 is also linked to a memory 65 in which are stored an identifier 66 which uniquely identifies the message consumer, a registration routine 67 which is executed when the consumer is connected to its parent node, and a look-up table 68 which identifies a number of message types and message origins, and corresponding outputs for each combination of message type and origin. It will be understood that, if the "message type" information includes data identifying the origin of a particular message of this type, then the look-up table 68 will only require to store information relating to message type and corresponding output.

The unique address of the parent node to which the message consumer 60 is connected is also stored in the memory 65, at 69.

In operation, an incoming message is received via the input port 61 of the message consumer 60 and interrogated by the message interrogator 62, which identifies the message type and message origin from the message header data. Processor 63 then retrieves from the look-up table 68 in memory 65 the appropriate action to be taken by the output device in response to receipt of that message, and causes the required output to be given by the output device 64.

### Setting up a message generator

The initial set-up of the message generator consists in firstly configuring the trigger sensor so that it can detect the event or events in respect of which the message generator is intended to generate messages. This may be done by temporarily connecting an external input device 100 such as a portable computer to the message generator. The trigger sensor 31 may be configured to receive an output, for example from a ball detector of a roulette wheel, so that the trigger sensor is notified when the ball has entered a pocket in the roulette wheel and can generate a corresponding output. Alternatively, the trigger sensor may receive an output from a pressure sensor on a card or roulette table which detects the placing of a gaming chip on the table, so that the trigger sensor can generate an output to indicate that a bet has been placed.

Next, data may be input from the input device 100 to the look-up table 37 in memory 33 identifying the events which the trigger sensor will detect, and the message types which are to be produced by the message generator in response to the detection of those events. The external input device 100 may also input into the memory 33 a network address such as "MG1112" or other identifying data relating to the message generator device.

### Connecting a message producer to a node

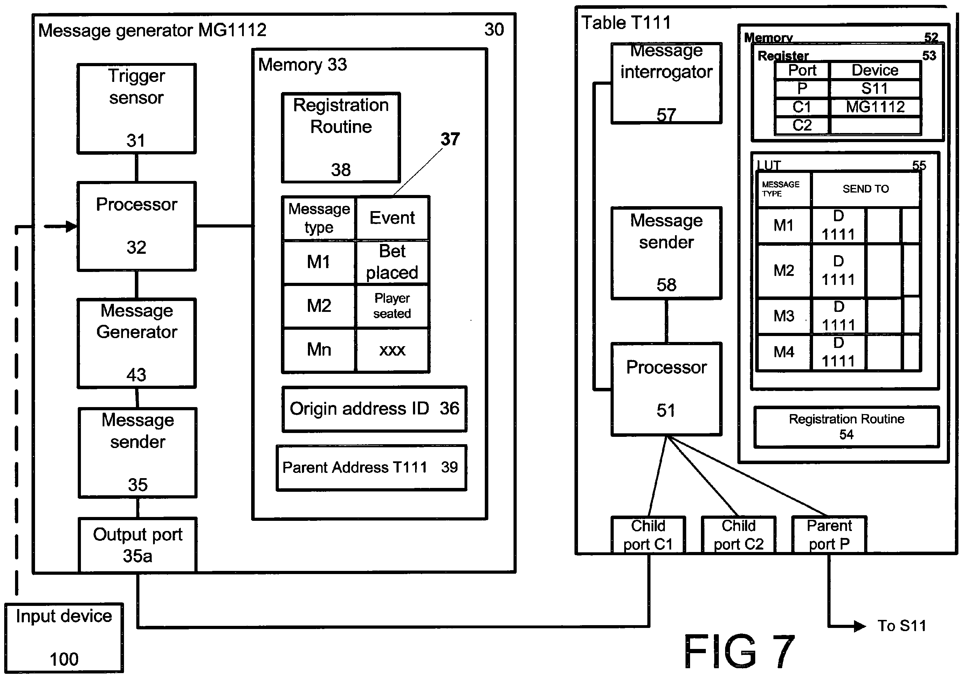

The registration routine for connecting a message generator such as message generator MG1112 to a node such as T111 will now be described with reference to Figure 7.

A physical or other communication connection between the message sender 35 of the message generator 30 and the message interrogator 57 of the node 50 is established via the output port 35a of the message generator, for example by connecting a cable or by establishing a wireless or infrared connection.

When communication is established, the communication node 50 sends a message to the message generator 30 identifying the address T111 of the communication node 50, which address the processor 32 of the message generator stores in its memory 39 as its "parent address".

Message generator 30 sends a message to the node 50, identifying the address or other unique identifier MG1112 of the message generator, and requesting that the address or identifier of the message generator is added in the list of child nodes in the register 53 of the node 50. The node 50 receives this message, and the processor 51 as part of the registration routine identifies the child port at which the message arrived, and adds the identifier MG1112 to the list of devices associated with that child port in the register 53. In the illustrated embodiment, the message generator 30 is connected to child port C1 of the table node 50, and thus in the register 53 the identifier MG 1112 is recorded against the port C1.

The message generator 30 also sends information identifying the types of message M1, M2....Mn which the message generator can produce. In this example, the message generator 30 is able to produce message type MI indicating that a bet has been placed, and message type M2 indicating that a player has taken a seat at the table. In this example, message type M1, M2 includes data identifying the message generator MG1112 as the origin of the message, and thus message type MI indicates a message from the message generator MG 1112 indicating that a bet has been placed. Alternatively, the origin information may be added to the message header independently of the message type data. The processor 51 of the node 50 checks whether each message type is already present in its look-up table 55, and if it is not then the processor 51 then adds the message type to its look-up table 55. At this stage in the registration process, the look-up table 55 includes only identifiers of message type/origin M1, M2, etc, but does not yet include any addresses to which these message types should be sent. The addition of this information to the look-up table 55 comes later in the process of setting up the network.

When all of the message types M1, M2, etc, that the message generator 30 can produce have been added to the look-up table 55, and the address of the message generator MG1112 has been added to the list of child nodes in the register 53, then the registration routine in the node 50 is complete. The registration routine of the message generator 30 is complete when all this information has been sent to the parent node 50, and the address of the parent node T111 has been recorded in the memory 33 of the message generator.

### Setting up a message consumer

A message consumer device 60 has an output device 64 which may be a display screen, or some other output device intended to address a human audience, such as a loudspeaker or an audio/visual projector. Alternatively or additionally, the output device 64 may provide a digital output for example to a recording device for storing and/or analysing message traffic. It is further foreseeing that the output device 64 may be a dispensing device for physical material such as a printer for printing vouchers or other material, or a dispenser for cash or gambling chips.

To configure the message consumer device, an input device 100 may be temporarily connected to the processor 63 of the message consumer device, and data from the input device used to populate the look-up table 68 by specifying message types M1, M2 etc, and optionally their respective origins if this data is not in the "message type" data, which require action by the message consumer. For each message type, a respective output action to be performed by the output device is also stored in the look-table. Typical output actions may be to display a particular graphic on a screen, to play a short video clip on a screen, to send a digital message to a recording device or any combination of these or other actions.

In the example shown, the message consumer 60 is set up so that when it receives a message of type M1 originating from the device MG 111, then a first output is given. When a message of type M2 is received from device MG 1122, then a second output is produced, and so on. It will be clearly understood that messages of the same type from different origins may give rise to the same or to different outputs from the message consumer, and messages of different types from either the same or from different origins may give rise to the same or to different outputs from the consumer device.

The input device 100 may also be used to store in the memory 65 an address ID 66, such as "D1111", for the message consumer to identify it to other network devices, in particular to its parent node. The appropriate connections to display devices etc are then made from the output device so that the required actions can be performed on receipt of their respective messages.

### Connecting a message consumer to a node

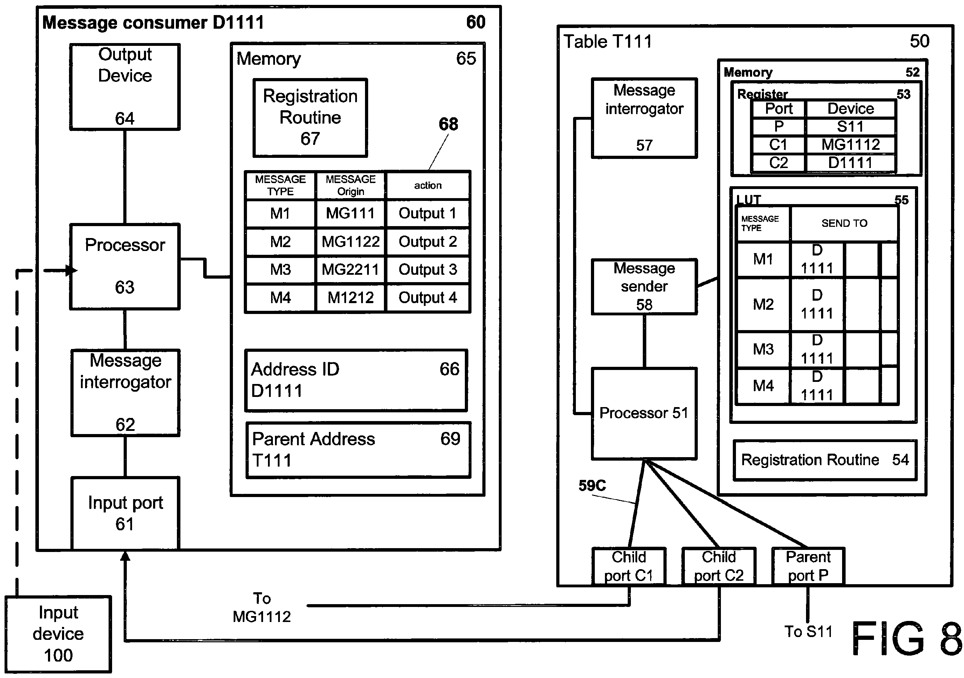

The registration routine for connecting a message consumer such as D1111 to a node such as T111 will now be described with reference to Figure 8.

To connect the message consumer 60 (for example D1111) to a node 50 of the communications network, a physical or other communication connection between the message interrogator 62 of the message consumer 60 and the message sender 58 of the node 50 is established via the input port 61 of message consumer 60, for example by connecting a cable or by establishing a wireless or infrared connection. In this example, the message generator MG 1112 has already been connected to the child port C1 of the node 50, and thus the message consumer 60 is connected to the child port C2 of the node 50.

When communication is established, the communication node 50 sends a message to the message consumer 60 identifying the address of the communication node 50 (for example T111), which the processor 63 of the message consumer stores in its memory 65 as its "parent address" 69.

The message consumer 60 sends its address identification 66 (in this case D1111) to the node 50, and requests to be added to the list of child nodes in the register 53 of the node 50. Processor 51 of the node 50 then identifies which child port the device is connected to (in this case C2), adds the address ID to the list of devices associated with that child port in the register 53 of its memory 52. In this example, message generator MG 1112 is already present in the list, associated with child port C1. The message consumer D1111 is entered in the register 53 associated with child port C2.

In the look-up table 68 of the message consumer 60, the message types for which an output from the message consumer 60 is required are listed. In the registration routine, each of these message types is sent to the node 50. In the example seen in Figure 6, the message consumer 60 has been set up so that in response to a message type M1 from an origin address MG111, the consumer performs an output identified as "Output 1". Likewise, in response to a message type M2 from an origin address MG1122, the consumer performs an output identified as "Output 2".

When the message type information is received at node 50, the processor 51 firstly determines whether or not that message type (i.e. that combination of message type and origin) is already present in its look-up table 55. If the message type is already present in the look-up table 55, then the address ID of the message consumer D1111 is added to the look-up table 55 in relation to that message type.

The processor 51 then determines whether the message type has an origin ID address that matches an address stored in the register 53 of the node 50 and associated with one of the child ports C1, C2 of the node 50, i.e. determines whether a message required to be sent to the message consumer 60 in fact originates at another child node of the communications node 50.

If the message type originates from one of the child nodes of the node 50, such as MG1112, then the message type will already be present in the look-up table 55 (having been stored there during the registration process for the message generator) and the registration routine will only require the address of the message consumer D1111 to be added to the look-up table 55 in relation to that message type.

In the example of Figure 8, the message consumer D 1111 requires to receive messages of type M2 from the message generator MG 1122. Since message type M2 is already present in the look-up table 55 of table node 50 following the registration process of message generator MG 1122 described in relation to Figure 7, the address of the message consumer D1111 is added in the look-up table in association with message type M2.

If the message type such as M1, M3 or M4 is not already present in the look-up table 55 indicating that this message type does not originate with a child node of this parent node 50, the processor 51 makes a new entry in the look-up table 55, recording the message type (for example M1 originating from MG111), and the address D1111 of the message consumer 60 to which it should be sent. Additionally, the processor 51 of the node 50 sends a message to its parent node (in this case node S11, as seen in Figure 2) requesting that the message type M1 originating from MG111 with the destination address T111 of node 50 be added to the look-up table 55 in the parent node S11. Likewise, message types M3 originating from MG2211 and M4 originating from M1212 are added to the look-up table 55 in the parent node S11, each associated with the address T111 of node 50.

The registration process continues at the parent node S11, where the processor determines whether or not each message type/origin received from node T111 is already present in the look-up table of the node S11. If it is not, then the processor adds the message type/origin to the lookup table 55 of node S11, in association with the address T111 of the node 50. The processor of the parent node S11 then determines whether the origin address of this message type is associated with one of its child ports, and if it is not the node S11 sends a message to its parent node (in this case node A1, as seen in Figure 2) requesting that the message type/origin be added to the look-up table 55 of the parent node A1, in association with the address S11.

### Connecting a node to a parent node

When a new communications node is connected to the system, a registration routine is followed in order that the newly-connected node should function to forward messages to their required destinations. The registration routine is stored in the memory 52 of the node, as illustrated in Figure 5.

The new communications and may be connected to any node in the system, and will then become the "child" of that node. Likewise, nodes which are message producers, message consumers, or other communications nodes may be connected to the new communications node, and become its "child" nodes.

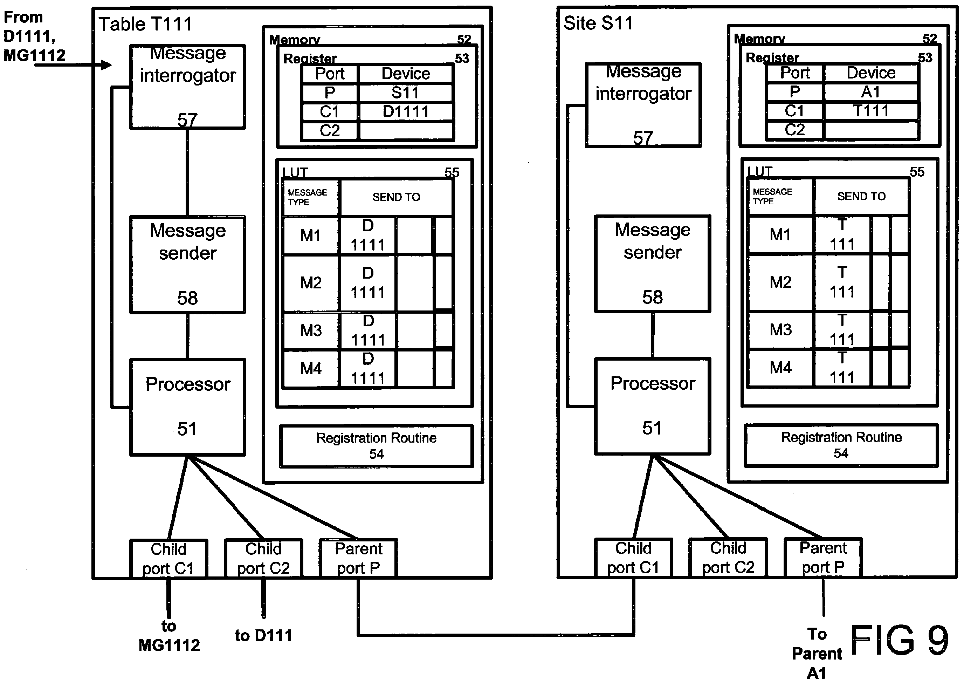

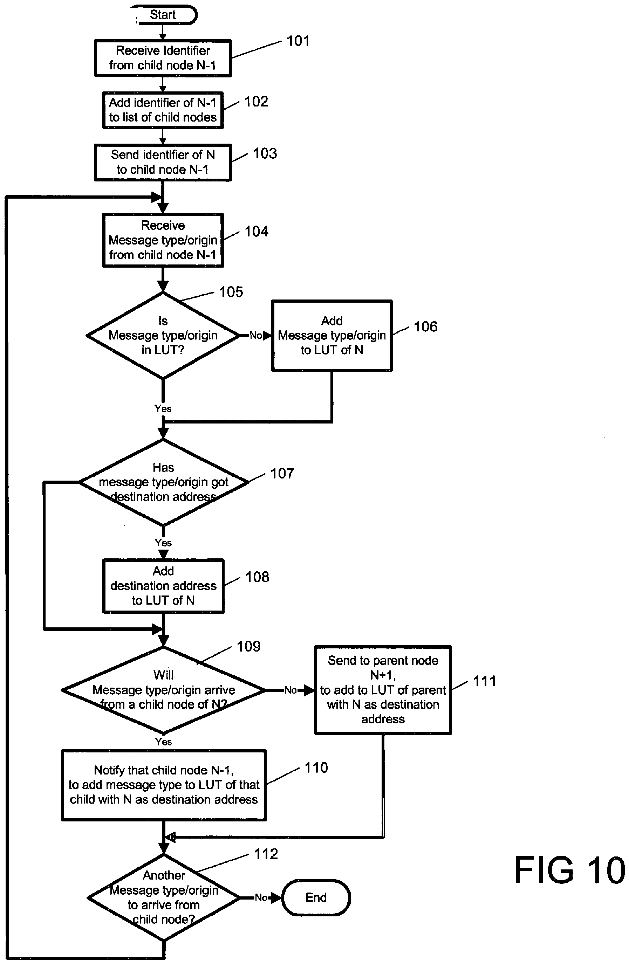

With reference to Figures 9 and 10, the process of connecting table node T111 and its parent site node S11 will now be described. In this process, the parent port of table node T111 is connected to an available child port of site node S11.

When communication is established between the table node and the site node, the two nodes first exchange addresses so that table node T111 records site node S11 as its "parent address", and site node S11 adds table node T111 to its register 53, associating the address of table node T111 with the relevant child port of node S11. In the illustrated example, the parent port P of table node T111 is connected to child port C1 of site node S11, and thus in the register 53 of site node S11 the address T111 is entered against the port C1.

Because it previously has been connected to display unit D1111 and message generator MG1112, the table node T111 of Figure 9 already has in its LUT 55 a number of message types. These message types correspond to the message types which message generator MG1112 can produce, and to the message types which display unit D1111 is set up to receive. The message types listed in the LUT may have corresponding destination addresses to which those message types should be sent. Table node T111 sends each combination of message type/origin and message destination from its LUT 55 to site node S11. For each combination, site node S11 first determines whether the message type is already in its LUT 55.

If the message type is not already in the LUT 55 of site node S11, then the message type is added.

If the message type is already in the LUT of site node S11, then the site node determines from the origin address information associated with that message type whether the message type will reach site node S11 from an address on the list of child nodes of node S11, i.e. checks whether the origin address is "local" to the node S11. If the origin address is local, then the site node adds the destination address to its LUT in relation to this message type.

If the site node determines from the origin address information that this message type will not arrive from a child node of the site node S11, the site node sends a message to its parent node (the area node A1) requesting that this message type be added to the LUT of the parent node A1, with the destination address set as site node S11.

The processing moves on to the next message type found in the LUT of table node T1.

Figure 10 is a flowchart illustrating the process steps taken at a parent node N when connecting a child node N-1 to the parent node N.

At step 101, the parent node receives an identifier from the child node, and at step 102 the identifier is added to the list of child nodes held in the register 53 of the parent node N.

The parent node N then sends its identifier to the child node N-1, and the child node records the identifier as the address of its parent node in its register 53.

At step 104 the parent node receives from the child node the first message type stored in the child node's LUT 55, together with the destination information (if any) associated with that message type.

At step 105 the parent node determines whether this message type is already found in its LUT 55. If the message type is not already present, it is added at step 106.

The parent node then determines at step 107 whether this message type has an associated destination address. If an associated destination address is present, then this is added to the LUT 55 of the parent node in association with this message type at step 108.

If there is no associated destination address, processing moves directly to step 109, in which the parent node determines from the information relating to the origin of the message whether messages of this type will arrive at the parent node from one of its child nodes.

If it is determined that messages of this type will arrive at the parent node from one of its child nodes, then at step 110 the parent node sends a message to that child node directing it to add this message type to its LUT (if it is not already present) with the address of the parent node as its associated destination address.

If it is determined that messages of this type will not arrive at the parent node from one of its child nodes, then at step 111 the parent node sends a message to its parent node directing it to add this message type to its LUT (if it is not already present) with the address of the parent node as its associated destination address. The parent node then interrogates the child node at step 112 to determine whether any other message types are stored in its LUT, and if so requests the child node to send the next one whereupon the processing resumes at step 104.

When the child node has notified the parent node of all message types stored in the LUT of the child node, the processing ends.

Each time a child node has an entry added to its LUT, or has an existing entry in its LUT altered, the relevant entry is notified to its parent node which then carries out processing steps 104 to 112 of Figure 10.

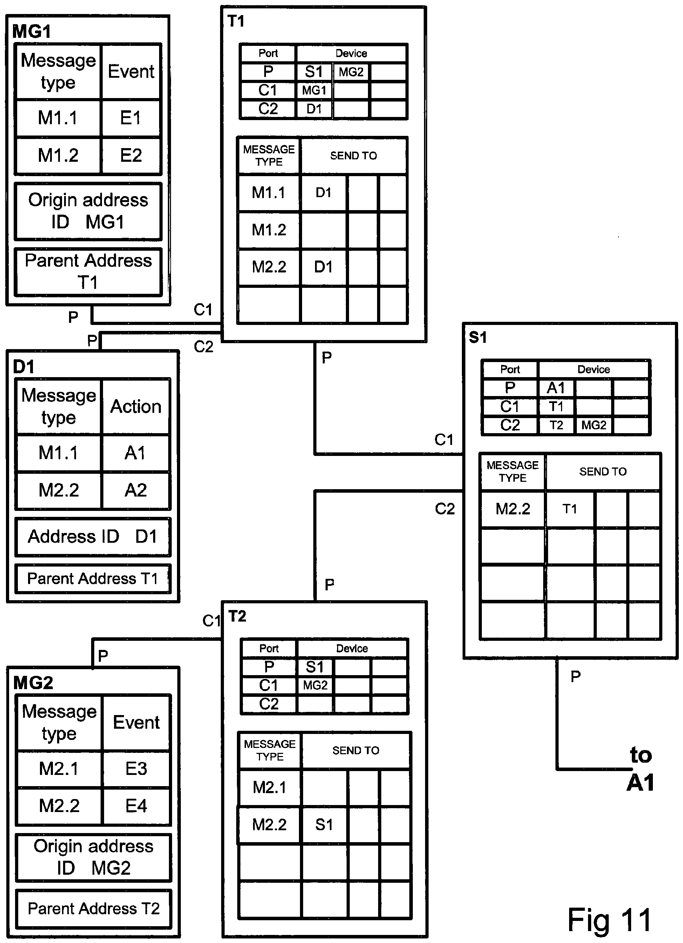

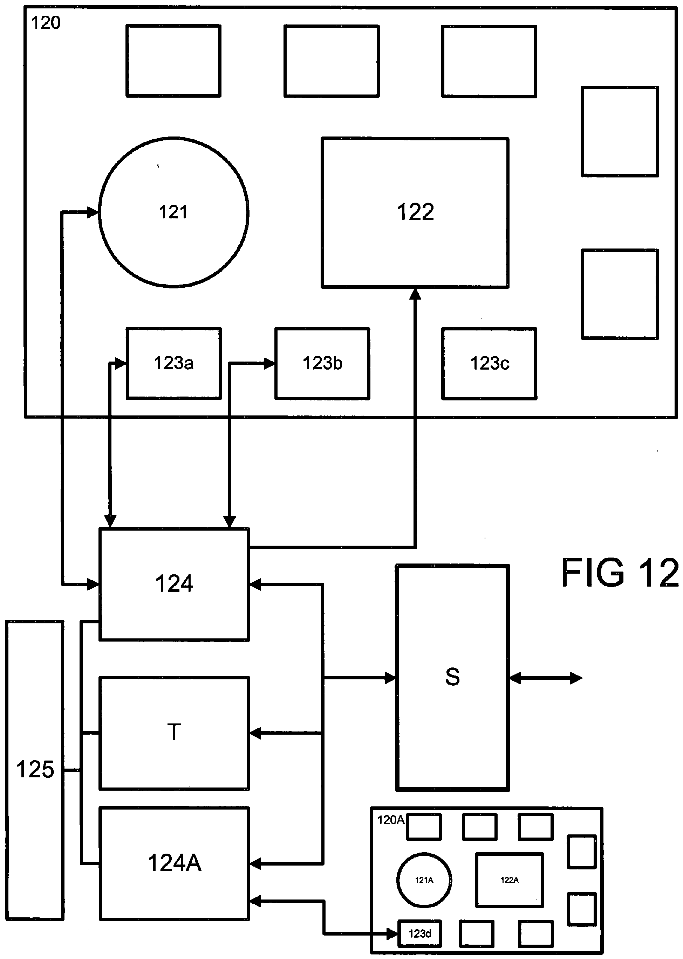

With reference to Figure 11, an exemplary part of a network will now be described. In the network shown in Figure 12, a site node S1 has two table nodes T1 and T2 connected to it as "children". Table node T1 has connected to it a first message generator MG1 and a first display unit D1. Table node T2 has connected to it a second message generator MG2.

The first message generator MG1 produces a message type M1.1 in response to a first event E1, and produces a message type M1.2 in response to a second event E2.

The second message generator MG2 produces a message type M2.1 in response to a third event E3, and produces a message type M2.2 in response to a fourth event E4.

Display device D1 is required to produce an output action A1 in response to a message of type M1.1 from message generator MG1, and to produce an output action A2 in response to a message of type M2.2 from message generator MG2.

When the first message generator MG1 is connected to child port C1 of table node T1, the message generator MG1 stores its parent address T1 and requests table node T1 to add MG1 to its list of child nodes. MG1 then sends its message type information to T1, and T1 adds to its lookup table the message types M1.1 and M1.2, at this stage without any corresponding "send to" addresses.

Display device D1 is then connected to child port C2 of table node T1, and T1 sends its address to D1 for storing as its parent address. D1 sends its address identification to T1 and requests to be added to the list of child nodes of T1. D1 then sends to T1 the message type information M1.1 and M2.2 identifying the messages which are to be sent to D1 for action.

When D1 sends message type M1.1, T1 determines that message type M1.1 is already present in the LUT of T1, T1 determines from the origin address information relating to message type M1.1 that this message type will be received at T1 from its child node MG1, and that the destination address D1 is also on its list of child nodes, and simply adds the address D1 in relation to message type M1.1 in its LUT. T1 may also send a message to child node MG1 indicating that an interest in message type M1.1 has been registered (because a "send to" address D1 is recorded in the LUT in relation to message type M1.1). Message generator MG1 may be configured so that when event E1 is detected, message M1.1 is only sent if message generator MG1 has been notified of the registration of an interest in message type M1.1, i.e the message is only sent if T1 has notified MG1 that there is a "send to" address (D1) recorded in the LUT of T1 in relation to message type M1.1.

D1 then sends message type M2.2 to T1. This message type is not already present in the LUT of T1, so T1 then adds the message type M2.2 and a corresponding destination address D1 to its LUT. T1 then determines from the origin address information relating to message type M2.2 whether this message type will be received at T1 from a child of T1. Finding that it will not, T1 sends a message to S1 requesting that message type M2.2 be added to the LUT of S1, with the corresponding "send to" destination address T1.

S1 then verifies whether or not the message type M2.2 is already in its LUT, and finding that it is not it adds message type M2.2 with the corresponding address T1. S1 then determines from the origin address information relating to message type M2.2 whether this message type will be received at S1 from a child node of S1. S11 determines that message type M2.2 will be received at S1 from its child node T2 via child port C2, and S1 then sends a request to T2 that message type M2.2 be recorded in its LUT with the destination address S1.

When the second message generator MG2 is connected to table node T2, the message generator MG2 stores its parent address T2 and requests table node T2 to add MG2 to its list of child nodes. MG2 then sends its message type information to T2.

When MG2 sends message type M2.1 to T2, T2 checks to see whether this message type is already present in its LUT, and since it is not, T2 not adds message type M2.1 to its LUT at this stage without any corresponding "send to" addresses.

When MG2 sends message type M2.2 to T2, T2 checks to see whether this message type is already present in its LUT, and finds that it is already present, with a corresponding "send to" destination address S1. T2 may verify that its LUT contains a message type which originates from one of its child nodes and has a destination address, and may then send a message to child node MG2 indicating that an interest in message type M2.2 has been registered. Message generator MG2 may be configured so that when event E4 is detected, message M2.2 is only sent if message generator MG2 has been notified of the registration of an interest in message type M2.2, i.e. the message M2.2 is only sent if T2 has notified MG2 that there is a "send to" address (S1) recorded in the LUT of T2 in relation to message type M2.2.

In operation, occurrence of event E4 causes message generator MG2 to send a message of the message type M2.2 to its table node T2. Table node T2 receives the message, retrieves the address S1 from its LUT and forwards the message on to site node S1 because the LUT of T2 has S1 as the destination address for message type M2.2.

The message arrives at site node S1, which redirects it to table node T1 on the basis of the "send to" destination address held in the LUT of S1. Likewise, when the message is received at table node T1, the message is forwarded to display device D1 on the basis of the "send to" destination address D1 held in the LUT of T1 for message type M2.2. Receiving message type M2.2, display device D1 performs the action A2 which may be to display an indicator lamp or play a video or make another output.

Likewise, when event E1 is detected by message generator MG1, then message type M1.1 is sent to table node T1, whence it is redirected to display device D1 on the basis of the "send to" destination address D1 held in the LUT of T1 for message type M1.1. Display device D1 performs action A1 in response to receipt of the message type M1.1.

### Messages requiring responses

The above description relates to messages which are sent out from message generators, but do not require responses from their recipients. The invention foresees that the communications network may also deal with messages which require the terminal receiving the message to send a response back to the originator of the message.

In the case of such messages, the message header includes data indicating that a response is required, in addition to data indicating the origin of the message, and the nature of the response required. With reference to Figure 11, an example will now be described in which a message of type M2.2 is sent from message generator MG2 to message consumer D1, requiring a response to be sent from message consumer D1 back to message generator MG2.

Message generator MG2 assembles the required message, placing in the message header the source address MG2, a "response required" flag, and message type information M2.2. The message is then sent via the parent port P of message generator MG2, and arrives at the child port C1 of node T2.

The processor of T2 retrieves from the message header the address and information relating to the source of the message, and determines that a reply is required by detecting the "response required" flag. The port C1 on which the message arrived is also identified. The node T2 then adds the identification of the source of the message (MG2) to the entry relating to port C1 list in its registry 53 which maintains a relationship between the ports of the node T2 and devices associated with each of those ports. The list of devices and respective message arrival ports is updated, irrespective of whether the arrival port is a child port or the parent port.

The message is then forwarded in accordance with the "send to" address for that message type recorded in the look-up table of the node T2, which in this case sends the message from parent port P of node T2 to the C2 child port of node S1.

The processor of S1 retrieves from the message header the address and information relating to the source of the message, and determines that a reply is required by detecting the "response required" flag. The port C2 on which the message arrived is also identified. The node S1 then adds the identification of the source of the message MG2 against the port C2 on the list in its registry 53 which maintains a relationship between the ports of the node S1 and devices associated with each of those ports. The node S1 then forwards the message via its port C1 to node T1, in accordance with the "send to" address recorded in its look-up table. T1 identifies the message as a message originating from MG2, arriving on port P and being of a type needing a reply. Node T1 adds address MG2 to its registry of ports and devices, in relation to port P. Node T1 then forwards the message to D1 in accordance with its "send to" table.

The message is thus delivered to D1, and the processor of D1 identifies the message as one which requires a response. D1 then formulates an appropriate response message, which includes in its header the fact that it is a response message and the device (MG2) to which it is directed, so that it can retrace the route back to its origin.

The response message is sent from D1 to the node T1. The processor of T1 identifies the message as a response message intended for message generator MG2, and retrieves from its registry the identity of the port associated with the device MG2. Node T1 will have in its registry list the source address MG2 to which the response is directed, listed as an address associated with port P, so that the return message is sent out on port P of T1 to site node S1.

When the message is received at S1, the processor of S1 identifies the message as a response message intended for message generator MG2, and retrieves from its registry the identity of the port associated with the device MG2. S1 will have MG2 listed as a device associated with its port C2, and will send the return message out from port C2 to node T2.

When the message is received at T2, the processor of T2 identifies the message as a response message intended for message generator MG2, and retrieves from its registry the identity of the port associated with the device MG2. Node T2 has terminal MG2 listed as being connected to port C1 and thus will direct the response out of port C1 to terminal MG2.

The message generator MG2 receives the response message.

Referring now to Figure 12, there is shown a schematic illustration of a roulette table 120 having a roulette wheel 121 and a display 122 on which are shown the wagers placed by players at the table. Players at the table may be seated at player positions 123a, 123b, 123c, which may be in the form of touch-screen input devices configured so that players may input information relating to their wagers.

The roulette table may be operated by a croupier, or may be automated. If the table is automated, then the roulette wheel 121 will include sensing devices to detect when the ball has settled in a pocket of the roulette wheel, a device to spin the roulette wheel, and a ball launching device which delivers the ball to the rim of the wheel in response to respective commands. The roulette wheel will therefore function both as a message generator, to generate messages indicating the pocket in which the ball has settled, and also as a message consumer since it will need to receive command signals in order to spin the wheel and launch the ball at the start of each game.

The display device 122 will operate as a message consumer, receiving messages which prompt different images to be displayed corresponding to wagers placed by the players at the table.

In one embodiment, each player position 123a, 123b, 123c etc may function only as a message generator, responding to an input by the player to send a message indicating the wager placed by the player. The player's wager message may be sent via a table communications node 124 to a table computer 125, and to the display 122. The wager placed by the player is displayed on the display 122 for the player to verify.

Alternatively, each player position 123a, 123b, 123c etc may function both as a message generator to generate messages corresponding to wagers placed by the player, and as a message consumer. For example, each player position may have a display screen which shows information relating to the particular player, such as his remaining account balance, the wager he has currently placed, the wagers of other players at the table, and optionally other information such as the results of the last ten spins of the roulette wheel.

The roulette wheel 121, the player positions 123 and the display 122 are all linked to the table communications node 124, so that gaming software, for example resident at the table computer 125 linked to the table node 124, can control operation of the roulette wheel 121 and resolve wagers placed by the players when each spin of the wheel results in the ball settling in a pocket. The table computer at 125 may be linked to more than one table node 124, and thus may control more than one roulette table 120.

When setting up the communication system, the display 122 is set up as a message consumer which receives messages from the player positions 123a, 123b etc in order to display each player's wager for the current game. Table node 124 has a look-up table in which message types of originating from the player positions and including wager information are listed, with the display 122 as their destination address. The display 122, in response to receiving those messages displays images corresponding to the wagers placed by the players. The player's wager messages may also be sent to the table computer 125, by adding the network address of the table computer 125 to the LUT in the table node 124 in relation to these messages.

The roulette wheel 121 is configured as a message generator, and has a ball sensor for generating messages signifying that the ball has settled in a particular pocket of the roulette wheel. These messages may be routed through the table node 124 to the table computer 125, where they are compared with wager information received from the player positions in order to determine how each player's wager should be resolved.

The roulette wheel 121 may also be configured as a message consumer, and may have wheel spinning and ball launching devices which operate in response to command messages from the table computer 125 to spin the wheel and launch the ball. The LUT in table node 124 will thus include entries corresponding to the command messages from table computer 125, with destination addresses identifying the roulette wheel spin mechanism and ball launch mechanism, respectively.

Each player position 123 may have an input means for receiving player inputs to generate wager messages, and optionally also a display device. The player position may include means by which a player can input entries into a lookup table in the player position device 123a to request, for example, wager messages of a specified type or types from a player position 123d at another table 120A. This may arise, for example, if a player at player position 123a at one table is acquainted with a player at player position 123d at table 120A and wishes to follow his game play.

When the player at position 123a adds such an entry, the lookup table in table node 124 will be modified to include the new message type or types of originating from player position 123d, with the destination address of player position 123a. Table node 124 will then communicate with casino node S so that an entry or entries are made in the LUT of casino node S in relation to the specified message types, with corresponding destination address of the table node 124.

Casino node S then communicates with the table node 124A of the table 120A at which the friend is playing, and makes an entry or entries in the LUT of table node 124A to add the casino node S as a destination address for messages of the specified types from player position 123d.

It will be understood that the wager messages from player position 123d will already have an entry or entries in the LUT of table node 124A, so that the wager messages can be sent to the table computer 125. The table node 124A simply adds a further "send to" address in the LUT for each of the required messages so that they are additionally forwarded to the casino node S.

Likewise, if a player in a first casino wishes to see the wagers being placed by an acquaintance in another casino, he may make an entry in the LUT of his player terminal 123a, which will alter the LUT in the table node 124 and in the casino node S. The casino node S at the first casino will then send a message to the next node up in the hierarchy, the area node, which will then add these message types to its LUT with a destination address of the casino node S. The area node will then identify the source of the messages required and determine whether the messages will reach the area node from a child of the area node (i.e. from another casino within the area). If it is determined that they will, the area node notifies that child node (i.e. the other casino) to direct messages of this type to the area node. The casino node at the other casino determines which table node it expects the messages to arrive from and notifies that table node to add the casino node to its LUT in respect of these messages. The table node will already have an entry in its LUT in respect of these messages from the player position and thus simply adds the casino node address as a further destination address in its LUT.

When these operations are completed the relevant messages from the player position at the other casino will be sent to its table node, forwarded to the casino node of the other casino, forwarded to the area node and then returned to the casino node at the first casino and then to the table node of the interested player and eventually to the interested player's position.

It will thus be understood that by connecting a message consumer device to any node in the system and specifying the type and source of messages which that consumer device shall receive, the necessary modifications to the LUTs of communications nodes are made, firstly moving up the hierarchical strata until a node is reached which is common to both the message consumer and the message origin, and then moving down from this common node to the message origin node or device. In each case, the message passes up the hierarchy from the message generator only as far as it needs to in order to be able to come back down to the relevant message consumer.

## Claims

1. A hierarchical system for transmitting a message from a sender to one or more recipients via at least one communication node(T111), wherein:
at least one communication node (T111) is connected to a parent communication node (S11) and to a number of child communication nodes(MG1112);
each communication node (T111) comprises:
means for receiving the message including information defining a message type (43) and a message origin identifier (42);
a memory (52), storing:
data identifying respective child devices each associated with one of the number of child communication nodes (MG1112);
data identifying a parent device associated with the parent communication node (S11); and
a register (55) relating each message type (43) to a number of message destinations selected from the number of child communication nodes (MG1112) and the parent communication node (S11);
and processor means (51) operable to:
determine the message type (43) of the received message;
determine one or more destinations for the received message, on the basis of the determined message type (43) and a correlation to a message destination stored in the register (55);
and
forward the received message to the determined destination or destinations; and wherein the processor (51) is further operable to:
receive from a child device associated with an associated child communication node (MG1112) an indication of a message type (43) and a message origin identifier (42);
store the specified message type 4(43) and the specified origin identifier (42) in the register (55);
determine, from the message origin identifier (42), if the message of the specified message type and origin identifier will be received from the child device associated with the associated child communication node (MG1112); and
if it is determined that the message will be received from the child device associated with the associated child communication node (MG1112), send the message to the associated child communication node (MG1112) to store the specified message type (43) and the specified message origin identifier (42) in the memory, in association with an address of the associated child communication node (MG1112); and
if it is determined that the message will not be received from the child device associated with the associated child communication node (MG1112), send the message to the parent communication node (S11) to store the specified message type and the specified message origin identifier in the memory, in association with an address of the parent communication node (S11);
the system further comprises a number of message generator devices (MG1112) each connected to a communication node (T111), each message generator device (MG1112) including:
means (31) for detecting an event;
means (34) for generating the message including information defining the message type (43) and the message origin identifier (42); and
means (35) for sending the generated message in response to the detection of the event.

2. A system according to claim 1, wherein at least one message generator device MG1112) includes means (31) for detecting a number of different events, and means (34) for generating the message including information defining a respective message type in relation to each event.

3. A system according to any preceding claim, further including a number of message consumer devices (D1111) each connected to a communication node (T1111), each message consumer device (D1111) including:
means (61) for receiving the message including information defining the message type and the message origin identifier; and
output means (64) for producing an output in response to the received message.

4. A system according to any preceding claim, wherein:
a communication node (T1111) is operable to receive the message including information defining the message type, the message origin, and a request for a response; and
the processor (51) is further operable to:
determine from the message data whether the response message is requested; identify the parent or child device from which the message was received at the communication node (T111);
forward the message to a destination in accordance with destination information corresponding to the message type stored in the communication node (T111);
store in the memory (52) a correlation between an origin address of the message and the parent or child device from which the message was received and to which the response message is to be routed.

5. A system according to claim 4, wherein the processor (51) of the communication node (T111) is further operable, on receipt of the response message, to:
determine, from data included in the response message, that the message is a response message;
determine, from data included in the message, an origin address of the message identifying the parent device or the child device to which the response message is to be delivered;
retrieve from memory (52) the identity of the parent device or the child device to which the response message is to be routed; and forward the response message to the identified parent device or child device.

6. A hierarchical system for transmitting a message from a sender to one or more recipients via at least one communication node(50) wherein:
each communication node has a parent communication port P and a number of child communication ports (C1, C2);
each communication node (50) comprises:
means for receiving the message including information defining a message type, response requirement data, and a message origin identifier;
a memory (52), comprising:
a first register (53) storing:
data identifying one or more child devices each associated with a respective one of the number of child communication ports (C1, C2);
data identifying one or more parent devices associated with the parent communication port (P); and
a second register (55) storing:
data relating each message type to a number of message destinations selected from the child devices each associated with an associated child communication node and from the parent device associated with a parent communication node;
and processor means (51) operable to:
determine the message type of the received message;
determine one or more destinations for the received message, on the basis of the determined message type and a correlation stored in the second register (55);
determine, from the response requirement data, whether the received message requires a reply to its source from its destination; and forward
the received message to the determined destination or destinations;
and wherein the processor (51) is further operable to:
receive at a child port (C1, C2) an indication of a message type and a message origin identifier;
store the specified message type and the specified message origin identifier in the second register (55);
determine, from the message origin identifier, if the message of the specified type and the specified message origin identifier will be received at an associated child communication port of the number of child ports (C1, C2); and
if it is determined that the message will be received at the associated child communication port (C1, C2), send the message to the child device associated with the associated child communication port (C1, C2) to store the specified message type and the specified message origin identifier in the memory (52), in association with an address of the associated child communication node (C1, C2); and
if it is determined that the message will not be received at the associated child port (C1, C2), send the message to the parent device associated with the parent communication port (P)to store the specified message type and the specified message origin identifier in the memory (52), in association with the address of the parent communication port (P);
and wherein the processor (51) is further operable, when it is determined that the received message requires the reply, to:
determine which of the child ports (C1, C2) and parent ports (P) the message was received at;
extract from the message the message origin identifier; and
add to the first register the message origin identifier in relation to a determined port;
the system further comprises a number of message generator devices (30) each connected to a communication node (50), each message generator device (30) including:
means (31) for detecting an event;
means (34) for generating the message including information defining the message type and the message origin identifier; and
means (35) for sending the generated message in response to the detection of the event.

7. A system according to claim 6, wherein the processor (51) of the communication node (50) is further operable, on receipt of the response message,
to:
determine, from data included in the response message, that the message is a response message;
determine, from data included in the message, an origin address of the message identifying the device to which the response message is to be delivered;
retrieve from memory (52) the identity of the parent communication port (P) or the child communication port (C1, C2) at which the message was received; and
forward the response message via the identified parent communication port (P) or child communication port (C1, C2)

8. A gaming system including a gaming apparatus, the gaming apparatus including one or more message generator devices adapted to detect events and generate messages on the basis of that detection, the system further comprising a number of message consumer devices each including means for receiving a message and means for producing an output in response to the received message, and the system further including a hierarchical system of communication nodes according to any preceding claim for transmitting messages from message generator devices to message consumer devices, wherein each message generator device is connected to a communication node as a "child" of that node and each message consumer device is connected to a communication node as a "child" of that node;
each message generator device includes:
means for detecting an event;
means for generating a message including information defining a message type and a message origin identifier; and
means for sending the generated message in response to the detection of the event.

9. A communications node for use in a system according to any preceding claim.

10. A method of transmitting messages over a communications network, using a system of communication nodes according to any of claims 1 to 7.

11. Apparatus for transmitting messages over a communications network, comprising at least one message-generating terminal, at least one message consuming terminal, and at least one communication node according to claim 9.

## Patentansprüche

1. Ein hierarchisches System zum Übertragen einer Nachricht von einem Sender an einen oder mehrere Empfänger über mindestens einen Kommunikationsknoten (T111), wobei:
mindestens ein Kommunikationsknoten (T111) mit einem Elternkommunikationsknoten (S11) und mit einer Anzahl von Kinderkommunikationsknoten (MG1112) verbunden ist; jeder Kommunikationsknoten (T111) Folgendes beinhaltet:
ein Mittel zum Empfangen der Nachricht, umfassend Informationen, die einen Nachrichtentyp (43) und einen Nachrichtenursprungsidentifikator (42) definieren;
einen Speicher (52), der Folgendes speichert:
Daten, die entsprechende Kindervorrichtungen, die jeweils mit einem der Anzahl von Kinderkommunikationsknoten (MG1112) assoziiert sind, identifizieren;
Daten, die eine Elternvorrichtung, die mit dem Elternkommunikationsknoten (S11) assoziiert ist, identifizieren; und
ein Register (55), das jeden Nachrichtentyp (43) mit einer Anzahl von Nachrichtenzielen in Beziehung setzt, die aus der Anzahl von Kinderkommunikationsknoten (MG1112) und dem Elternkommunikationsknoten (S11) ausgewählt sind;
und ein Prozessormittel (51), das für Folgendes betriebsfähig ist:
Bestimmen des Nachrichtentyps (43) der empfangenen Nachricht;
Bestimmen eines oder mehrerer Ziele für die empfangene Nachricht auf der Basis des bestimmten Nachrichtentyps (43) und einer Korrelation mit einem Nachrichtenziel, die in dem Register (55) gespeichert ist;
und Weiterleiten der empfangenen Nachricht an das bestimmte Ziel oder die bestimmten Ziele;
und wobei der Prozessor (51) ferner für Folgendes betriebsfähig ist:
Empfangen, von einer mit einem assoziierten Kinderkommunikationsknoten (MG1112) assoziierten Kindervorrichtung, einer Angabe eines Nachrichtentyps (43) und eines Nachrichtenursprungsidentifikators (42);
Speichern des spezifizierten Nachrichtentyps (43) und des spezifizierten Ursprungsidentifikators (42) in dem Register (55);
Bestimmen, anhand des Nachrichtenursprungsidentifikators (42), ob die Nachricht im Hinblick auf den spezifizierten Nachrichtentyp und den Ursprungsidentifikator von der mit dem assoziierten Kinderkommunikationsknoten (MG1112) assoziierten Kindervorrichtung empfangen wird; und
i. falls bestimmt wird, dass die Nachricht von der mit dem assoziierten Kinderkommunikationsknoten (MG1112) assoziierten Kindervorrichtung empfangen wird, Senden der Nachricht an den assoziierten Kinderkommunikationsknoten (MG1112) zum Speichern des spezifizierten Nachrichtentyps (43) und des spezifizierten Nachrichtenursprungsidentifikators (42) in dem Speicher in Verbindung mit einer Adresse des assoziierten Kinderkommunikationsknotens (MG1112); und
ii. falls bestimmt wird, dass die Nachricht nicht von der mit dem assoziierten Kinderkommunikationsknoten (MG1112) assoziierten Kindervorrichtung empfangen wird, Senden der Nachricht an den Elternkommunikationsknoten (S11) zum Speichern des spezifizierten Nachrichtentyps und des spezifizierten Nachrichtenursprungsidentifikators in dem Speicher in Verbindung mit einer Adresse des Elternkommunikationsknotens (S11);
wobei das System ferner eine Anzahl von Nachrichtenerzeugervorrichtungen (MG1112) beinhaltet, die jeweils mit einem Kommunikationsknoten (T111) verbunden sind, wobei jede Nachrichtenerzeugervorrichtung (MG1112) Folgendes umfasst:
i. ein Mittel (31) zum Detektieren eines Ereignisses;
ii. ein Mittel (34) zum Erzeugen der Nachricht, umfassend Informationen, die den Nachrichtentyp (43) und den Nachrichtenursprungsidentifikator (42) definieren; und
iii. ein Mittel (35) zum Senden der erzeugten Nachricht als Antwort auf die Detektion des Ereignisses.

2. System gemäß Anspruch 1, wobei mindestens eine Nachrichtenerzeugervorrichtung (MG1112) ein Mittel (31) zum Detektieren einer Anzahl von unterschiedlichen Ereignissen und ein Mittel (34) zum Erzeugen der Nachricht, umfassend Informationen, die einen entsprechenden Nachrichtentyp definieren, in Bezug auf jedes Ereignis, umfasst.

3. System gemäß einem der vorhergehenden Ansprüche, ferner umfassend eine Anzahl von Nachrichten-Consumer-Vorrichtungen (D1111), die jeweils mit einem Kommunikationsknoten (T1111) verbunden sind, wobei jede Nachrichten-Consumer-Vorrichtung (D1111) Folgendes umfasst:
i. ein Mittel (61) zum Empfangen der Nachricht, umfassend Informationen, die den Nachrichtentyp und den Nachrichtenursprungsidentifikator definieren; und
ii. ein Ausgabemittel (64) zum Produzieren einer Ausgabe als Antwort auf die empfangene Nachricht.

4. System gemäß einem der vorhergehenden Ansprüche, wobei:
ein Kommunikationsknoten (T1111) betriebsfähig ist, um die Nachricht, umfassend Informationen, die den Nachrichtentyp, den Nachrichtenursprung und eine Anforderung einer Antwort definieren, zu empfangen; und
der Prozessor (51) ferner für Folgendes betriebsfähig ist:
Bestimmen, anhand der Nachrichtendaten, ob die Antwortnachricht angefordert wird;
Identifizieren der Eltern- oder Kindervorrichtung, von der die Nachricht an dem Kommunikationsknoten (T111) empfangen wurde;
Weiterleiten der Nachricht an ein Ziel in Übereinstimmung mit Zielinformationen, die dem in dem Kommunikationsknoten (T111) gespeicherten Nachrichtentyp entsprechen; Speichern, in dem Speicher (52), einer Korrelation zwischen einer Ursprungsadresse der Nachricht und der Eltern- oder Kindervorrichtung, von der die Nachricht empfangen wurde und an die die Antwortnachricht geleitet werden soll.

5. System gemäß Anspruch 4, wobei der Prozessor (51) des Kommunikationsknotens (T111) ferner für Folgendes betriebsfähig ist:
bei Empfang der Antwortnachricht, Bestimmen, anhand der in der Antwortnachricht umfassten Daten, dass die Nachricht eine Antwortnachricht ist;
Bestimmen, anhand der in der Nachricht umfassten Daten, einer Ursprungsadresse der Nachricht, die die Elternvorrichtung oder die Kindervorrichtung, an die die Antwortnachricht geliefert werden soll, identifiziert;
Abrufen, aus dem Speicher (52), der Identität der Elternvorrichtung oder der Kindervorrichtung, an die die Antwortnachricht geleitet werden soll; und
Weiterleiten der Antwortnachricht an die identifizierte Elternvorrichtung oder Kindervorrichtung.

6. Ein hierarchisches System zum Übertragen einer Nachricht von einem Sender an einen oder mehrere Empfänger über mindestens einen Kommunikationsknoten (50), wobei:
jeder Kommunikationsknoten einen Elternkommunikationsport P und eine Anzahl von Kinderkommunikationsports (C1, C2) aufweist;
jeder Kommunikationsknoten (50) Folgendes beinhaltet:
ein Mittel zum Empfangen der Nachricht, umfassend Informationen, die einen Nachrichtentyp, Antworterfordernisdaten und einen Nachrichtenursprungsidentifikator definieren;
einen Speicher (52), der Folgendes beinhaltet:
ein erstes Register (53), das Folgendes speichert:
Daten, die eine oder mehrere Kindervorrichtungen, die jeweils mit einem entsprechenden einen der Anzahl von Kinderkommunikationsports (C1, C2) assoziiert sind, identifizieren;
Daten, die eine oder mehrere Elternvorrichtungen, die mit dem Elternkommunikationsport (P) assoziiert sind, identifizieren; und
ein zweites Register (55), das Folgendes speichert:
Daten, die jeden Nachrichtentyp mit einer Anzahl von Nachrichtenzielen in Beziehung setzen, die aus den Kindervorrichtungen, die jeweils mit einem assoziierten Kinderkommunikationsknoten assoziiert sind, und aus der Elternvorrichtung, die mit einem Elternkommunikationsknoten assoziiert ist, ausgewählt sind;
und ein Prozessormittel (51), das für Folgendes betriebsfähig ist:
Bestimmen des Nachrichtentyps der empfangenen Nachricht;
Bestimmen eines oder mehrerer Ziele für die empfangene Nachricht auf der Basis des bestimmten Nachrichtentyps und einer Korrelation, die in dem zweiten Register (55) gespeichert ist;
Bestimmen, anhand der Antworterfordernisdaten, ob die empfangene Nachricht eine Rückantwort von ihrem Ziel an ihre Quelle erfordert; und
Weiterleiten der empfangenen Nachricht an das bestimmte Ziel oder die bestimmten Ziele;
und wobei der Prozessor (51) ferner für Folgendes betriebsfähig ist:
Empfangen, an einem Kinderport (C1, C2), einer Angabe eines Nachrichtentyps und eines Nachrichtenursprungsidentifikators;
Speichern des spezifizierten Nachrichtentyps und des spezifizierten Nachrichtenursprungsidentifikators in dem zweiten Register (55);
Bestimmen, anhand des Nachrichtenursprungsidentifikators, ob die Nachricht im Hinblick auf den spezifizierten Typ und den spezifizierten Nachrichtenursprungsidentifikator an einem assoziierten Kinderkommunikationsport der Anzahl von Kinderports (C1, C2) empfangen wird; und
i. falls bestimmt wird, dass die Nachricht an dem assoziierten Kinderkommunikationsport (C1, C2) empfangen wird, Senden der Nachricht an die mit dem assoziierten Kinderkommunikationsport (C1, C2) assoziierte Kindervorrichtung zum Speichern des spezifizierten Nachrichtentyps und des spezifizierten Nachrichtenursprungsidentifikators in dem Speicher (52) in Verbindung mit einer Adresse des assoziierten Kinderkommunikationsknotens (C1, C2); und
ii. falls bestimmt wird, dass die Nachricht nicht an dem assoziierten Kinderport (C1, C2) empfangen wird, Senden der Nachricht an die mit dem Elternkommunikationsport (P) assoziierte Elternvorrichtung zum Speichern des spezifizierten Nachrichtentyps und des spezifizierten Nachrichtenursprungsidentifikators in dem Speicher (52) in Verbindung mit der Adresse des Elternkommunikationsports (P);
und wobei der Prozessor (51), wenn bestimmt wird, dass die empfangene Nachricht die Rückantwort erfordert, ferner für Folgendes betriebsfähig ist:
iii. Bestimmen, an welchem der Kinderports (C1, C2) und der Elternports (P) die Nachricht empfangen wurde;
iv. Extrahieren, aus der Nachricht, des Nachrichtenursprungsidentifikators; und
v. Hinzufügen, zu dem ersten Register, des Nachrichtenursprungsidentifikators in Bezug auf einen bestimmten Port;
wobei das System ferner eine Anzahl von Nachrichtenerzeugervorrichtungen (30) beinhaltet, die jeweils mit einem Kommunikationsknoten (50) verbunden sind, wobei jede Nachrichtenerzeugervorrichtung (30) Folgendes umfasst:
i. ein Mittel (31) zum Detektieren eines Ereignisses;
ii. ein Mittel (34) zum Erzeugen der Nachricht, umfassend Informationen, die den Nachrichtentyp und den Nachrichtenursprungsidentifikator identifizieren; und
iii. ein Mittel (35) zum Senden der erzeugten Nachricht als Antwort auf die Detektion des Ereignisses.

7. System gemäß Anspruch 6, wobei der Prozessor (51) des Kommunikationsknotens (50) ferner für Folgendes betriebsfähig ist:
bei Empfang der Antwortnachricht,
Bestimmen, anhand der in der Antwortnachricht umfassten Daten, dass die Nachricht eine Antwortnachricht ist;
Bestimmen, anhand der in der Nachricht umfassten Daten, einer Ursprungsadresse der Nachricht, die die Vorrichtung, an die die Antwortnachricht geliefert werden soll,
identifiziert;
Abrufen, aus dem Speicher (52), der Identität des Elternkommunikationsports (P) oder des Kinderkommunikationsports (C1, C2), an dem die Nachricht empfangen wurde; und
Weiterleiten der Antwortnachricht über den identifizierten Elternkommunikationsport (P) oder Kinderkommunikationsport (C1, C2).

8. Ein Spielsystem, das ein Spielgerät umfasst, wobei das Spielgerät eine oder mehrere Nachrichtenerzeugervorrichtungen umfasst, die angepasst sind, um Ereignisse zu detektieren und Nachrichten auf der Basis dieser Detektion zu erzeugen, wobei das System ferner eine Anzahl von Nachrichten-Consumer-Vorrichtungen beinhaltet, die jeweils ein Mittel zum Empfangen einer Nachricht und ein Mittel zum Produzieren einer Ausgabe als Antwort auf die empfangene Nachricht umfassen, und wobei das System ferner ein hierarchisches System aus Kommunikationsknoten gemäß einem der vorhergehenden Ansprüche zum Übertragen von Nachrichten von Nachrichtenerzeugervorrichtungen an Nachrichten-Consumer-Vorrichtungen umfasst, wobei jede Nachrichtenerzeugervorrichtung mit einem Kommunikationsknoten als ein "Kind" dieses Knotens verbunden ist und jede Nachrichten-Consumer-Vorrichtung mit einem Kommunikationsknoten als ein "Kind" dieses Knotens verbunden ist;
wobei jede Nachrichtenerzeugervorrichtung Folgendes umfasst:
i. ein Mittel zum Detektieren eines Ereignisses;
ii. ein Mittel zum Erzeugen einer Nachricht, umfassend Informationen, die einen Nachrichtentyp und einen Nachrichtenursprungsidentifikator definieren; und
iii. ein Mittel zum Senden der erzeugten Nachricht als Antwort auf die Detektion des Ereignisses.

9. Ein Kommunikationsknoten zur Verwendung in einem System gemäß einem der vorhergehenden Ansprüche.

10. Ein Verfahren zum Übertragen von Nachrichten über ein Kommunikationsnetz unter Verwendung eines Systems aus Kommunikationsknoten gemäß einem der Ansprüche 1 bis 7.

11. Ein Gerät zum Übertragen von Nachrichten über ein Kommunikationsnetz, beinhaltend mindestens ein nachrichtenerzeugendes Endgerät, mindestens ein Nachrichten-Consuming-Endgerät und mindestens einen Kommunikationsknoten gemäß Anspruch 9.

## Revendications

1. Un système hiérarchique pour transmettre un message d'un expéditeur à un ou plusieurs destinataires via au moins un nœud de communication (T111), dans lequel :
au moins un nœud de communication (T111) est connecté à un nœud de communication parent (S11) et à de multiples nœuds de communication enfants (MG1112) ;
chaque nœud de communication (T111) comprend :
des moyens destinés à recevoir le message incluant des informations définissant un type de message (43) et un identifiant d'origine du message (42) ;
une mémoire (52), stockant :
des données identifiant des dispositifs enfants respectifs associés chacun à un nœud des multiples nœuds de communication enfants (MG1112) ;
des données identifiant un dispositif parent associé au nœud de communication parent (S11) ; et
un registre (55) reliant chaque type de message (43) à de multiples destinations de message sélectionnées parmi les multiples nœuds de communication enfants (MG1112) et le nœud de communication parent (S11) ;
et des moyens processeurs (51) à même de fonctionner afin de :
déterminer le type de message (43) du message reçu ;
déterminer une ou plusieurs destinations pour le message reçu, sur la base du type de message (43) déterminé et d'une corrélation à une destination de message stockée dans le registre (55) ;
et faire suivre le message reçu vers la ou les destination(s) déterminée(s) ;
et dans lequel le processeur (51) est en outre à même de fonctionner afin de :
recevoir, en provenance d'un dispositif enfant associé à un nœud de communication enfant (MG1112) associé, une indication donnant un type de message (43) et un identifiant d'origine du message (42) ;
stocker le type de message (43) spécifié et l'identifiant d'origine (42) spécifié dans le registre (55) ;
déterminer, d'après l'identifiant d'origine du message (42), si le message du type de message et de l'identifiant d'origine spécifiés sera reçu en provenance du dispositif enfant associé au nœud de communication enfant (MG1112) associé ; et
i. s'il est déterminé que le message sera reçu en provenance du dispositif enfant associé au nœud de communication enfant (MG1112) associé, envoyer le message au nœud de communication enfant (MG1112) associé afin de stocker le type de message (43) spécifié et l'identifiant d'origine du message (42) spécifié dans la mémoire, en association avec une adresse du nœud de communication enfant (MG1112) associé ; et
ii. s'il est déterminé que le message ne sera pas reçu en provenance du dispositif enfant associé au nœud de communication enfant (MG1112) associé, envoyer le message au nœud de communication parent (S11), afin de stocker le type de message spécifié et l'identifiant d'origine du message spécifié dans la mémoire, en association avec une adresse du nœud de communication parent (S11) ;
le système comprend en outre de multiples dispositifs générateurs de messages (MG1112) connectés chacun à un nœud de communication (T111), chaque dispositif générateur de messages (MG1112) incluant :
i. des moyens (31) destinés à détecter un événement ;
ii. des moyens (34) destinés à générer le message incluant des informations définissant le type de message (43) et l'identifiant d'origine du message (42) ; et
iii. des moyens (35) destinés à envoyer le message généré en réponse à la détection de l'événement.

2. Un système selon la revendication 1, dans lequel au moins un dispositif générateur de messages (MG1112) inclut des moyens (31) destinés à détecter de multiples événements différents, et des moyens (34) destinés à générer le message incluant des informations définissant un type de message respectif en rapport à chaque événement.

3. Un système selon n'importe quelle revendication précédente, incluant en outre de multiples dispositifs consommateurs de messages (D1111) connectés chacun à un nœud de communication (T1111), chaque dispositif consommateur de messages (D1111) incluant:
i. des moyens (61) destinés à recevoir le message incluant des informations définissant le type de message et l'identifiant d'origine du message ; et
ii. des moyens de sortie (64) destinés à produire une sortie en réponse au message reçu.

4. Un système selon n'importe quelle revendication précédente, dans lequel :
un nœud de communication (T1111) est à même de fonctionner afin de recevoir le message incluant des informations définissant le type de message, l'origine du message, et une requête de réponse ; et
le processeur (51) est en outre à même de fonctionner afin de :
déterminer d'après les données du message si le message de réponse est requis ou non ;
identifier le dispositif enfant ou parent en provenance duquel le message a été reçu au niveau du nœud de communication (T111) ;
faire suivre le message vers une destination conformément à des informations de destination correspondant au type de message stocké dans le nœud de communication (T111) ;
stocker dans la mémoire (52) une corrélation entre une adresse d'origine du message et le dispositif enfant ou parent en provenance duquel le message a été reçu et vers lequel le message de réponse doit être acheminé.

5. Un système selon la revendication 4, dans lequel le processeur (51) du nœud de communication (T111) est en outre à même de fonctionner, à réception du message de réponse, afin de :
déterminer, d'après des données incluses dans le message de réponse, que le message est un message de réponse ;
déterminer, d'après des données incluses dans le message, une adresse d'origine du message identifiant le dispositif parent ou le dispositif enfant auquel le message de réponse doit être livré ;
tirer de la mémoire (52) l'identité du dispositif parent ou du dispositif enfant vers lequel le message de réponse doit être acheminé ; et
faire suivre le message de réponse vers le dispositif parent ou le dispositif enfant identifié.

6. Un système hiérarchique pour transmettre un message d'un expéditeur à un ou plusieurs destinataires via au moins un nœud de communication (50), dans lequel :
chaque nœud de communication a un port de communication parent P et de multiples ports de communication enfants (C1, C2) ;
chaque nœud de communication (50) comprend :
des moyens destinés à recevoir le message incluant des informations définissant un type de message, des données relatives aux exigences en matière de réponse, et un identifiant d'origine du message ;
une mémoire (52), comprenant :
un premier registre (53), stockant :
des données identifiant un ou plusieurs dispositifs enfants associés chacun à un port respectif des multiples ports de communication enfants (C1, C2) ;
des données identifiant un ou plusieurs dispositifs parents associés au port de communication parent (P) ; et
un deuxième registre (55), stockant :
des données reliant chaque type de message à de multiples destinations de message sélectionnées parmi les dispositifs enfants associés chacun à un nœud de communication enfant associé et parmi le dispositif parent associé à un nœud de communication parent ;
et des moyens processeurs (51) à même de fonctionner afin de :
déterminer le type de message du message reçu ;
déterminer une ou plusieurs destinations pour le message reçu, sur la base du type de message déterminé et d'une corrélation stockée dans le deuxième registre (55) ;
déterminer, d'après les données relatives aux exigences en matière de réponse, si le message reçu requiert ou non une réponse à sa source en provenance de sa destination ; et
faire suivre le message reçu vers la ou les destination(s) déterminée(s) ;
et dans lequel le processeur (51) est en outre à même de fonctionner afin de :
recevoir au niveau d'un port enfant (C1, C2) une indication donnant un type de message et un identifiant d'origine du message ;
stocker le type de message spécifié et l'identifiant d'origine du message spécifié dans le deuxième registre (55) ;
déterminer, d'après l'identifiant d'origine du message, si le message du type spécifié et de l'identifiant d'origine du message spécifié sera reçu au niveau d'un port de communication enfant associé des multiples ports enfants (C1, C2) ; et
i. s'il est déterminé que le message sera reçu au niveau du port de communication enfant (C1, C2) associé, envoyer le message au dispositif enfant associé au port de communication enfant (C1, C2) associé afin de stocker le type de message spécifié et l'identifiant d'origine du message spécifié dans la mémoire (52), en association avec une adresse du nœud de communication enfant (C1, C2) associé ; et
ii. s'il est déterminé que le message ne sera pas reçu au niveau du port enfant (C1, C2) associé, envoyer le message au dispositif parent associé au port de communication parent (P) afin de stocker le type de message spécifié et l'identifiant d'origine du message spécifié dans la mémoire (52), en association avec l'adresse du nœud de communication parent (P) ;
et dans lequel le processeur (51) est en outre à même de fonctionner, lorsqu'il est déterminé que le message reçu requiert la réponse, afin de :
iii. déterminer au niveau de quel port des ports enfants (C1, C2) et des ports parents (P) le message a été reçu ;
iv. extraire du message l'identifiant d'origine du message ; et
v. ajouter dans le premier registre l'identifiant d'origine du message en rapport à un port déterminé ;
le système comprend en outre de multiples dispositifs générateurs de messages (30) connectés chacun à un nœud de communication (50), chaque dispositif générateur de messages (30) incluant :
i. des moyens (31) destinés à détecter un événement ;
ii. des moyens (34) destinés à générer le message incluant des informations définissant le type de message et l'identifiant d'origine du message ; et
iii. des moyens (35) destinés à envoyer le message généré en réponse à la détection de l'événement.

7. Un système selon la revendication 6, dans lequel le processeur (51) du nœud de communication (50) est en outre à même de fonctionner, à réception du message de réponse, afin de :
déterminer, d'après des données incluses dans le message de réponse, que le message est un message de réponse ;
déterminer, d'après des données incluses dans le message, une adresse d'origine du message identifiant le dispositif auquel le message de réponse doit être livré ;
tirer de la mémoire (52) l'identité du port de communication parent (P) ou du port de communication enfant (C1, C2) au niveau duquel le message a été reçu ; et
faire suivre le message de réponse via le port de communication parent (P) identifié ou le port de communication enfant (C1, C2) identifié.

8. Un système de jeux vidéo incluant un appareil de jeux vidéo, l'appareil de jeux vidéo incluant un ou plusieurs dispositifs générateurs de messages conçus pour détecter des événements et générer des messages sur la base de cette détection, le système comprenant en outre de multiples dispositifs consommateurs de messages incluant chacun des moyens destinés à recevoir un message et des moyens destinés à produire une sortie en réponse au message reçu, et le système incluant en outre un système hiérarchique de nœuds de communication selon n'importe quelle revendication précédente pour transmettre des messages en provenance de dispositifs générateurs de messages à des dispositifs consommateurs de messages, chaque dispositif générateur de messages étant connecté à un nœud de communication en tant qu' « enfant » de ce nœud et chaque dispositif consommateur de messages étant connecté à un nœud de communication en tant qu' « enfant » de ce nœud ; chaque dispositif générateur de messages inclut :
i. des moyens destinés à détecter un événement ;
ii. des moyens destinés à générer un message incluant des informations définissant un type de message et un identifiant d'origine du message ; et
iii. des moyens destinés à envoyer le message généré en réponse à la détection de l'événement.

9. Un nœud de communication pour une utilisation dans un système selon n'importe quelle revendication précédente.

10. Une méthode de transmission de messages sur un réseau de communications, en utilisant un système de nœuds de communication selon n'importe lesquelles des revendications 1 à 7.

11. Appareil pour transmettre des messages sur un réseau de communications, comprenant au moins un terminal de génération de messages, au moins un terminal de consommation de messages, et au moins un nœud de communication selon la revendication 9.
